# EUROPÄISCHE PATENTSCHRIFT

(11) **EP 2 933 285 B1**
(45) Veröffentlichungstag und Bekanntmachung des Hinweises auf die Patenterteilung: **09.01.2019**
(21) Anmeldenummer: 15001053.6
(22) Anmeldetag: 13.04.2015
(51) Int. Cl.: C08J 3/12, C08K 5/29, C08L 79/08

(54) **HYDROLYSESTABILISATORFORMULIERUNGEN**
HYDROLYSIS STABILISER FORMULATIONS
FORMULES DE STABILISATEUR À L'HYDROLYSE

(30) Priorität: 15.04.2014 EP 14001363
(43) Veröffentlichungstag der Anmeldung: 21.10.2015
(73) Patentinhaber: Raschig GmbH, 67061 Ludwigshafen (DE)
(72) Erfinder: Pandolfi, Alexander, 67117 Limburgerhof (DE)
(74) Vertreter: Zellentin & Partner mbB Patentanwälte

(56) Entgegenhaltungen:
- EP-B1- 1 767 572
- US-A- 2 941 983
- US-A- 3 929 733

## Beschreibung

Gegenstand der vorliegenden Erfindung sind Formulierungen für Kunststoffadditive, insbesondere Hydrolysestabilisatoren. Die Erfindung betrifft auch extrudierte Formkörper bestehend aus einem oder mehreren polymeren Carbodiimiden und ein Verfahren zur Herstellung von Granulat aus polymeren Carbodiimiden ohne Zusatz von nicht polymeren Carbodiimiden, Polymeren und Bindemitteln.

Die Verwendung von aliphatischen, aromatischen oder cycloaliphatischen Mono-, Bis- oder Polycarbodiimiden zur Stabilisierung von Kunststoffen insbesondere von solchen auf Polyesterbasis ist bekannt. Beispielhaft sei auf die Patente und Patentanmeldungen EP 503 421 B1, CH 621 135, US 3,193,522, EP 473 633, DE 1 285 747 und EP 567 884 verwiesen.

Bisher wurden diese Substanzen entweder als Pulver bzw. Schmelze oder aber als sogenannte Masterbatche eingesetzt. Pulver oder Schmelzen bereiten bei der Dosierung und Verteilung im Polymer Schwierigkeiten. Als Masterbatche bezeichnet man konzentrierte Stammansätze einer Substanz in dem Polymer, für das die Substanz verwendet werden soll. Masterbatche verhalten sich hinsichtlich der Dosierung und Verteilung optimal, da sie in derselben Granulatform und - größe wie das Polymer vorliegen. Allerdings sollten Masterbatche mit demselben Polymer gefertigt werden, zu dessen Stabilisierung sie bestimmt sind. Hierdurch ist einerseits eine Anfertigung für den Einzelfall notwendig und andererseits ist das Polymermaterial, welches zur Herstellung des Masterbatches verwendet wird, bereits längere Zeit höheren Temperaturen ausgesetzt. Durch diese thermische Belastung findet bereits ein Abbau statt, der sich am deutlichsten in einer Verfärbung des Granulats des Masterbatch zeigt.

In der JP 2004124010 wird zur Überwindung der genannten Probleme vorgeschlagen, den Hydrolysestabilisator zusammen mit einem thermoplastischen Polymer zu Tabletten zu verpressen. Diese Tabletten enthalten jedoch einerseits ebenso wie der Masterbatch ein Polymer und weisen andererseits ebenso wie Pulver oder Schmelzen eine andere Raumstruktur auf, als das Polymergranulat.

Sie zeigen daher auch die damit verbundenen Probleme der Verteilung im Polymer.

Gemäß EP 1 767 572 B1 gelang es Mischungen aus Carbodiimiden und polymeren Carbodiimiden zu Granulaten zu extrudieren. Dort wird ausdrücklich gesagt, dass sich polymere Carbodiimide nicht extrudieren ließen.

Obwohl mit der in Granulatform extrudierten Mischung ein großer Fortschritt erzielt wurde, besteht weiter Bedarf an Reinsubstanzen in der gewünschten Granulatform. Eine Kompaktierung von pulverförmigen Carbodiimiden war bisher nicht erfolgreich.

US 3 929 733 A und US 2 941 983 A berichten, dass sich polymere Carbodiimide extrudieren lassen sollen, wenn sie mit speziellen Endgruppen terminiert werden. US 3 929 733 A beschreibt Phenyl, Alkylphenyl, Alkoxyphenyl, Halogenphenyl oder Cyclohexyl und US 2 941 983 A primäre oder sekundäre Alkoholreste. Eine spezielle Terminierung ist aufwändig und konkrete Beispiele für extrudierte Formkörper fehlen. US 2 941 983 A beschreibt gar keine Verarbeitung und in der US 3 929 733 A werden nur Platten gepresst.

Es besteht daher noch immer die Aufgabe, reine Carbodiimide in Granulatform bereitzustellen.

Überraschend wurde nun gefunden, dass sich polymere Carbodiimide mit einem Extruder zu Granulat formen lassen, wenn man die Temperatur des Extruders deutlich unter dem Schmelzpunkt des Carbodiimid einstellt.

Die obige Aufgabe wird daher gelöst durch extrudierte Formkörper, bestehend aus polymerem Carbodiimid und ein Verfahren zur Herstellung von polymerem Carbodiimid, bei dem polymeres Carbodiimid bereitgestellt wird, in einen Extruder geführt wird, der auf maximale Temperaturen eingestellt ist, die 10°C unter dem Schmelzpunkt des polymeren Carbodiimid liegen, und zu Granulat der gewünschten Raumform geformt wird. Die erfindungsgemäßen Formkörper enthalten keine thermoplastischen Polymermaterialien oder Bindemittel und vorzugsweise auch keine anderen Zusätze.

Es ist aber denkbar, dass weitere Additive zugesetzt werden, wie z.B. Antioxidantien, Licht- und UV-Stabilisatoren, Mattierungsmittel, Zusätze zur Verbesserung der Anfärbbarkeit oder zur Verminderung der elektrostatischen Aufladung, Flammschutzmittel, sowie organische oder anorganische Farbstoffe oder Mischungen von zwei oder mehreren der genannten Additive. Wenn ein Zusatz erfolgt, sind Formulierungen, die neben dem polymeren Carbodiimid zusätzlich Antioxidantien und/oder Licht- bzw. UV-Stabilisatoren enthalten, bevorzugt.

Die Vorteile der erfindungsgemäßen Granulate liegen darin, dass gezielt ein gewünschtes polymeres Carbodiimid in Granulatform und als Reinsubstanz bereitgestellt werden kann. Außerdem ist natürlich wie bei den Granulaten nach EP 1 767 572 B1 eine sehr gute Homogenisierung im Polymer möglich. Der granulierte Stabilisator in fester Form lässt sich in dem Polymergranulat dauerhaft homogen verteilen, ohne dass eine thermische Belastung stattfindet. Die Verweilzeit des Polymers im Extruder bis zur Homogenisierung des Stabilisators ist viel kürzer. Bei gleicher Verweilzeit wird eine bessere Homogenisierung erzielt, der Stabilisator ist von Beginn an besser verteilt und kann so auch die gesamte Masse von Beginn an schützen. Bei Pulvern oder auch Tabletten findet häufig trotz einer zunächst homogenen Mischung der Feststoffe bereits beim Transport zum Extruder eine Entmischung statt. Somit kann der Stabilisator zu Beginn nicht gleichmäßig genug vor dem thermischen Abbau schützen.

Die erfindungsgemäßen Formkörper eignen sich als Stabilisatoren für Kunststoffe mit hydrolisierbaren Gruppen, insbesondere Polymere auf Polyesterbasis. Hierzu zählen unter anderem Polykondensationsprodukte wie Polyester, Polyamide, Polycaprolactone, Polyesteramide, Polyimide, Polyamidimide, Polyetherimide und Polyetherester, als auch Polyadditionsprodukte wie Polyurethane, Polyharnstoffe und Polyharnstoff/Polyurethan-Elastomere, sowie radikalisch hergestellte Polymere wie Polyvinylacetat und native Polymere wie Cellulose, Cellulosederivate und Stärke.

Besonders bewähren sich die erfindungsgemäßen Formulierungen bei aliphatisch/aromatischen Polyestern wie z.B. Polyethylenterephthalaten oder Polybutylenterephthalaten, aber auch bei vollständig aromatischen und beispielsweise bei halogenierten Polyestern. Bausteine von Polyestern sind vorzugsweise Diole und Dicarbonsäuren, bzw. entsprechend aufgebaute Oxycarbonsäuren. Hauptsäurebestandteil der Polyester ist die Terephthalsäure, geeignet sind natürlich auch andere vorzugsweise para- oder trans-ständige Verbindungen wie z.B. 2,6-Naphthalindicarbonsäure aber auch p-Hydroxybenzoesäure zu nennen. Weiterhin können auch aromatische m-ständige Disäuren wie Isophthalsäure als Comonomere in den Polyester eingebaut werden. Typische geeignete zweiwertige Alkohole wären beispielsweise Ethylenglykol, Propandiol, 1,4-Butandiol aber auch Hydrochinon usw. Bevorzugte aliphatische Diole haben zwei bis vier C-Atome. Besonders bevorzugt ist Ethylenglykol.

Die Konzentration an Stabilisator im Polymer liegt vorzugsweise im Bereich von 0,05 bis 5 Gew.-%, bevorzugt 0,1 bis 1,0 Gew.-%, insbesondere 0,3 bis 0,8 Gew.-%.

Als Stabilisatoren werden die an sich bekannten polymeren Carbodiimide der Formel 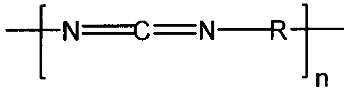 verwendet, in der R für gleiche oder verschiedene, optional substituierte Alkyl-, Cycloalkyl- oder Arylgruppen, vorzugsweise Arylgruppen, steht und wobei n ≥ 2 ist, vorzugsweise im Bereich von 10 bis 100 liegt. Besonders geeignet sind substituierte Arylcarbodiimide, insbesondere mit Alkylgruppen substituierte. Unter Alkylgruppe sind lineare oder verzweigte einschließlich cyclische Gruppen aufweisende, gesättigte oder ungesättigte Kohlenwasserstoffreste zu verstehen. Bevorzugt sind gesättigte Reste, besonders bevorzugt lineare, verzweigte oder cyclische Gruppen mit 1 bis 20 Kohlenstoffatomen, insbesondere mit 3 bis 6 Kohlenstoffatomen. Am meisten bevorzugt sind Isopropylgruppen. Spezielle Endgruppen sind nicht notwendig und vorzugsweise nicht vorhanden, d.h. es liegen Isocyanatendgruppen vor. Insbesondere sind weder Phenyl, Alkylphenyl, Alkoxyphenyl, Halogenphenyl oder Cyclohexyl noch primäre oder sekundäre Alkoholreste als Endgruppen vorhanden.

Als Polycarbodiimide sind erfindungsgemäß vorzugsweise Verbindungen geeignet, bei denen die Carbodiimideinheiten über ein-, zwei- oder dreifach substituierte Arylkerne miteinander verbunden sind, wobei als Arylkerne Phenylen, Naphthylen, Diphenylen und der vom Diphenylmethan abgeleitete zweiwertige Rest in Betracht kommen und die Substituenten nach Art und Substitutionsort den Substituenten der im Arylkern substituierten Carbodiimiden entsprechen. Ein besonders bevorzugtes Polycarbodiimid ist das handelsübliche aromatische Polycarbodiimid, das in o-Stellung zu den Carbodiimidgruppen, d.h. in 2,6- oder 2,4,6-Stellung am Benzolkern mit Isopropylgruppen substituiert ist. Die Polycarbodiimide haben vorzugsweise ein mittleres Molekulargewicht (bestimmt mittels GPC in Tetrahydrofuran) von 2000 bis 25000, insbesondere von 5000 bis 15000.

Weitere Additive können sein: Antioxidantien, insbesondere aus der Gruppe der sterisch gehinderten Phenole, z.B. die Irganox-Typen von Ciba Spezialitätenchemie AG oder die IONOL-Typen von Raschig GmbH; thermische Stabilisatoren auf P-Basis wie z.B. die Irgafos-Typen von Ciba Spezialitätenchemie AG; und Lichtschutzadditive, insbesondere Stabilisatoren auf Basis sterisch gehinderter Amine (HALS) wie z.B. die Tinuvin-Typen von Ciba Spezialitätenchemie AG.

Typische Addititve für Polyamide sind Kupfer-iodid-systeme als anorganische Antioxidantien und Lichtstabilisatoren, sterisch gehinderte Phenole und Phosphite als organische Antioxidantien und Lichtstabilisatoren sowie aromatische Amine als Antioxidantien und Lichtstabilisatoren.

Typische Additive für Polyester sind Antioxidantien wie Irganox 245 und Irganox 1010 von Ciba Spezialitätenchemie AG, Lichtstabilisatoren wie Tinuvin 234, Tinuvin 1577 und Irgafos 168 von Ciba Spezialitätenchemie AG,

Sofern ein oder mehrere weitere Additive enthalten sind, beträgt ihr Mengenanteil jeweils von 1 bis 60 Gew.-%, bevorzugt von 5 bis 30 Gew.-%.

Die Abmessungen der erfindungsgemäßen Formkörper entsprechen vorzugsweise im wesentlichen denjenigen der Granulate des Polymers, welches stabilisiert werden soll. Dies gewährleistet eine effiziente und homogene Mischung mit den Polymermaterialien und stellt sicher, dass keine Entmischung stattfindet. Typischerweise handelt es sich daher bei den erfindungsgemäßen Formkörpern um zylindrische Granulate mit einem Durchmesser im Bereich von 0,5 bis 5 mm, vorzugsweise 1 bis 2 mm und einer Höhe im Bereich von 1 mm bis 1 cm, vorzugsweise 2 bis 5 mm. Eine weitere typische Form sind ellipsoide Chips mit einem Durchmesser von 3 mm bis 1 cm, vorzugsweise 3 bis 6 mm und einer Höhe an der stärksten Stelle von 2 bis 5 mm.

Zur Herstellung wird das bzw. werden die polymere(n) Carbodiimid(e) bereitgestellt und einem Extruder zugeführt. Als Extruder eignen sich die an sich bekannten Vorrichtungen. Bevorzugt sind Extruder, welche das Material mit wenig Belastung erweichen, wie Einschneckenextruder oder Granulierzylinder, da keine Mischungen homogenisiert werden müssen.

Die bevorzugten polymeren Carbodiimide haben einen Schmelzpunkt (Kapillar-Messmethode, Gerät von Büchi) von 140 bis 160 °C. Daher wird der Extruder auf Temperaturen von maximal 130 °C geheizt. Vorzugsweise werden Temperaturen im Bereich von 100 bis 125 °C, insbesondere bis 120 °C eingestellt. Es versteht sich, dass für Carbodiimide mit anderen Schmelzpunkten die Temperaturen dementsprechend geändert werden. Generell werden Temperaturen gewählt, welche 10 bis 30 °C unter dem Schmelzpunkt liegen, insbesondere 15 bis 20 °C darunter. Natürlich muss die Temperatur so hoch sein, dass das Carbodiimid erweicht und eine gewisse Plastizität bekommt.

Im Unterschied zu den üblicherweise gewählten Bedingungen wird also erfindungsgemäß das polymere Carbodiimid beträchtlich unterhalb seines Schmelzpunktes extrudiert. Da beim Extrudieren von Polymeren in der Regel Temperaturen beträchtlich oberhalb des Schmelzpunktes eingestellt werden, könnte dies die Erklärung für den bisherigen Misserfolg beim Extrudieren der reinen Polycarbodiimide sein.

Am Ende des Extruders befindet sich, wie bei der Herstellung von Kunststoffgranulat, als formgebende Düse eine Platte mit Durchgangsbohrungen, die typischerweise einen Durchmesser von 1 bis 5 mm haben, meist 2 bis 3 mm.

Die Zuführung des polymeren Carbodiimid in den Extruder erfolgt z.B. mittels einem über dem Extruder liegenden Aufgabetrichter. Die im Extruder entstehende verfestigte Masse wird als Strang durch die Durchgangsbohrungen gedrückt und dort abgeschlagen, üblich ist ein Abschlag von etwa 2 mm. Nach dem Abkühlen können die fertigen Granulate in gewünschter Weise weiterverarbeitet werden.

Wenn eine oder mehrere, weitere Additive zugesetzt werden sollen, werden die vorgesehenen Bestandteile in Pulverform bzw. in flüssiger und Pulverform zunächst mechanisch möglichst homogen gemischt. Anschließend wird die Mischung über einen Extruder zu Formkörpern verarbeitet. Die Additive werden hierzu bevorzugt in einem bekannten Pulvermischer, z.B. einem Kreuzstrompulvermischer oder einem Wurfschaufelmischer homogen gemischt.

Die folgenden Beispiele sollen die Erfindung veranschaulichen, ohne sie jedoch auf die konkret beschriebenen Ausführungsformen zu beschränken. Alle %-Angaben beziehen sich, soweit nicht anders angegeben, auf das Gewicht.

### Beispiel 1:

Stabilisator 9000 (polymeres Carbodiimid von Raschig GmbH) wurde in einen Buss-Einschneckenextruder gefahren. Düsendurchmesser 2,2 mm, Abschlag ca. 2mm. Die fünf Heizelemente wurden wie folgt beheizt:
130°C // 130°C // keine Heizung // keine Heizung // keine Heizung

Anschließend erfolgte ein Wasserabschlag und umgehende Trocknung. Es wurde ein optimales Granulat erhalten, keine Partikel, Abrieb etc., da nass granuliert. Das Granulat ist in Form und Konsistenz identisch mit einem Masterbatch, der 80 Gew.-% PET enthält.

### Beispiel 2:

Das Granulat von Beispiel 1 und ein gemäß EP 1 767 572 B1 hergestelltes Granulat aus Carbodiimid und polymerem Carbodiimid wurden 3 Tage in einem Taumelkolben bewegt, um die Bewegung auf einer Rüttelrinne zu simulieren. Beim Granulat von Beispiel 1 ergaben sich 0,0 g Abrieb, bei dem aus Gemisch von Carbodiimid und polymerem Carbodiimid bestehenden Granulat gemäß der EP 1 767 572 B1 ergaben sich 7,0 g Abrieb. Erfindugnsgemäßes Granulat zeigt demgemäß vorteilhaft weniger bzw. keinen Abrieb als Granulat gemäß dem Stand der Technik.

## Patentansprüche

1. Extrudierter Formkörper zur Stabilisierung von Polymeren **dadurch gekennzeichnet, dass** er aus einem oder mehreren polymeren Carbodiimiden der Formel 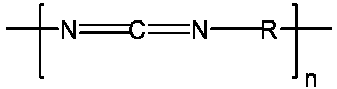 mit Isocyanatendgruppen besteht, wobei R für gleiche oder verschiedene, optional mit Alkylgruppen substituierte Alkyl-, Cycloalkyl- oder Arylgruppen steht und wobei n im Bereich von 2 bis 100 liegt.

2. Formkörper gemäß Anspruch 1, **dadurch gekennzeichnet, dass** das oder die polymeren Carbodiimid(e) ausgewählt ist/sind unter aromatischen Polycarbodiimiden, die in 2,6- oder 2,4,6-Stellung am Benzolkern mit Isopropylgruppen substituiert sind.

3. Formkörper gemäß Anspruch 2, **dadurch gekennzeichnet, dass** das oder die polymeren Carbodiimid(e) ein mittleres Molekulargewicht von 2000 bis 25000 g/mol, insbesondere jedoch von 5000 bis 15000 g/mol haben.

4. Formkörper gemäß einem der Ansprüche 1 bis 3, **dadurch gekennzeichnet, dass** die Form und Abmessungen der Formkörper denjenigen eines Polymergranulats, welches stabilisiert werden soll, entsprechen.

5. Formkörper gemäß Anspruch 4, **dadurch gekennzeichnet, dass** es zylindrische Granulate mit einem Durchmesser im Bereich von 0,5 bis 5 mm, vorzugsweise 1 bis 2 mm und einer Höhe im Bereich von 1 mm bis 1 cm, vorzugsweise 2 bis 5 mm sind.

6. Formkörper gemäß Anspruch 4, **dadurch gekennzeichnet, dass** es ellipsoide Chips mit einem Durchmesser von 3 mm bis 1 cm, vorzugsweise 3 bis 6 mm und einer Höhe an der stärksten Stelle von 2 bis 5 mm sind.

7. Verfahren zur Herstellung von Granulat aus polymeren Carbodiimiden ohne Zusatz von nicht polymeren Carbodiimiden, Polymeren und Bindemitteln, umfassend die Schritte
- Bereitstellen von mindestens einem polymeren Carbodiimid
- Einführen des/der polymeren Carbodiimid(e) in einen Extruder
- Einstellen der Temperatur des Extruders auf eine Temperatur von 10 bis 30 °C unterhalb des Schmelzpunktes des/der polymeren Carbodiimid(e)
- Formung des/der polymeren Carbodiimid(e) zu Granulat.

8. Verfahren gemäß Anspruch 7, **dadurch gekennzeichnet, dass** die Temperatur von 15 bis 20 °C unterhalb der Schmelztemperatur des/der polymeren Carbodiimid(e) liegt.

9. Verfahren gemäß Anspruch 7 oder 8, **dadurch gekennzeichnet, dass** ein Nassabschlag erfolgt.

10. Verfahren gemäß einem der Ansprüche 7 bis 9, **dadurch gekennzeichnet, dass** ein Einschneckenextruder oder ein Granulierzylinder verwendet wird.

11. Verfahren gemäß einem der Ansprüche 7 bis 9, **dadurch gekennzeichnet, dass** bei einem Extruder mit zwei oder mehr Heizelementen nur das erste oder die ersten beiden Heizelemente beheizt werden.

## Claims

1. Extruded molded body for the stabilization of polymers, **characterized in that** it consists of one or more polymeric carbodiimides of the formula 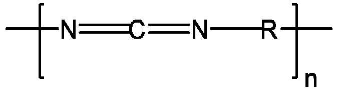 with isocyanate end groups, where R is identical or different alkyl, cycloalkyl or aryl groups, optionally substituted with alkyl groups, and wherein n ranges from 2 to 100.

2. Molded body according to claim 1, **characterized in that** the polymeric carbodiimide(s) is/are selected from aromatic polycarbodiimides which are substituted in the 2,6- or 2,4,6-position on the benzene nucleus with isopropyl groups.

3. Molded body according to claim 2, **characterized in that** the polymeric carbodiimide(s) has/have an average molecular weight of from 2000 to 25000 g/mol, but in particular from 5000 to 15000 g/mol.

4. Molded body according to one of claims 1 to 3, **characterized in that** the shape and dimensions of the molded body correspond to those of polymer pellets to be stabilized.

5. Molded body according to claim 4, **characterized in that** it is cylindrical pellets having a diameter in the range of from 0.5 to 5 mm, preferably from 1 to 2 mm, and a height in the range of from 1 mm to 1 cm, preferably from 2 to 5 mm.

6. Molded body according to claim 4, **characterized in that** it is ellipsoidal chips having a diameter of from 3 mm to 1 cm, preferably from 3 to 6 mm, and a height at the biggest point of from 2 to 5 mm.

7. Method for the preparation of pellets of polymeric carbodiimides without addition of non-polymeric carbodiimides, polymers and binders comprising the steps of
- providing at least one polymeric carbodiimide
- introducing the polymeric carbodiimide(s) into an extruder
- adjusting the temperature of the extruder to a temperature of from 10 to 30 °C below the melting point of the polymeric carbodiimide(s)
- forming the polymeric carbodiimide(s) to pellets.

8. Method according to claim 7, **characterized in that** the temperature is from 15 to 20 °C below the melting temperature of the polymeric carbodiimide(s).

9. Method according to claim 7 or 8, **characterized in that** a wet pelletizing takes place.

10. Method according to one of claims 7 to 9, **characterized in that** a single-screw extruder or a granulating cylinder is used.

11. Method according to one of claims 7 to 9, **characterized in that** in an extruder with two or more heating elements, only the first or the first two heating elements are heated.

## Revendications

1. Corps façonné par extrusion, destiné à stabiliser des polymères, **caractérisé en ce qu'**il est constitué d'un ou de plusieurs carbodiimides polymères qui sont pourvus de groupes terminaux isocyanate et qui répondent à la formule 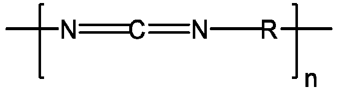 R représentant des groupes alkyle, cycloalkyle ou aryle lesquels sont de nature identique ou différente et lesquels sont optionnellement substitués avec des groupes alkyle, et n étant compris entre 2 et 100.

2. Corps façonné selon la revendication 1, **caractérisé en ce que** le ou les carbodiimide(s) polymère(s) est/sont choisi(s) parmi les polycarbodiimides aromatiques substitués avec des groupes isopropyle en positions 2,6 ou 2,4,6 sur le noyau benzénique.

3. Corps façonné selon la revendication 2, **caractérisé en ce que** le ou les carbodiimide(s) présente(nt) une masse moléculaire moyenne comprise entre 2 000 et 25 000 g/mol, de préférence cependant entre 5 000 et 15 000 g/mol.

4. Corps façonné selon l'une des revendications 1 à 3, **caractérisé en ce que** la forme et les dimensions desdits corps façonnés correspondent à celles de granulés polymères devant être stabilisés.

5. Corps façonné selon la revendication 4, **caractérisé en ce qu'**il s'agit de granulés cylindriques ayant un diamètre compris entre 0,5 et 5 mm, de préférence entre 1 et 2 mm, et une hauteur comprise entre 1 mm et 1 cm, de préférence entre 2 et 5 mm.

6. Corps façonné selon la revendication 4, **caractérisé en ce qu'**il s'agit de puces ellipsoïdes ayant un diamètre compris entre 3 mm et 1 cm, de préférence entre 2 et 6 mm, et une hauteur comprise entre 2 et 5 mm à l'endroit le plus épais.

7. Procédé de fabrication de granulés en carbodiimides polymères, sans ajout de carbodiimides non-polymères, de polymères et de liants, comprenant les étapes suivantes
- mise à disposition d'au moins un carbodiimide polymère
- introduction du/des carbodiimide(s) polymère(s) dans une extrudeuse
- réglage de la température de l'extrudeuse à une température qui est inférieure de 10 à 30 °C par rapport au point de fusion du/des carbodiimide(s) polymère(s)
- mise en forme du/des carbodiimide(s) polymère(s) pour obtenir des granulés.

8. Procédé selon la revendication 7, **caractérisé en ce que** la température est inférieure de 15 à 20 °C par rapport à la température de fusion du/des carbodiimide(s) polymère(s).

9. Procédé selon les revendications 7 ou 8, **caractérisé en ce que** la découpe est réalisée à l'état humide.

10. Procédé selon l'une des revendications 7 à 9, **caractérisé en ce que** l'on utilise une extrudeuse mono-vis ou un cylindre de granulation.

11. Procédé selon l'une des revendications 7 à 9, **caractérisé en ce que**, lorsqu'il s'agit d'une extrudeuse comportant deux ou davantage éléments de chauffage, seulement le premier ou les deux premiers éléments de chauffage sont chauffés.
